Europäisches Patentamt

European Patent Office

Office européen des brevets

(11) Veröffentlichungsnummer: **0 145 790**
A2

# (12) EUROPÄISCHE PATENTANMELDUNG

(21) Anmeldenummer: **83109843.9**

(51) Int. Cl.⁴: **C 05 F 9/04**

(22) Anmeldetag: **01.10.83**

(30) Priorität: **12.08.83 DE 3329189**

(43) Veröffentlichungstag der Anmeldung: **26.06.85**
**Patentblatt 85/26**

(84) Benannte Vertragsstaaten: **AT BE CH DE FR GB IT LI LU NL SE**

(71) Anmelder: **Weichelt, Theodor, Dr., Auf der Lieth 6, D-3400 Göttingen (DE)**

(72) Erfinder: **Weichelt, Theodor, Dr., Auf der Lieth 6, D-3400 Göttingen (DE)**

(54) **Chemische Stoffe und Stoffmischungen zur Zermürbung (Zersetzung) organischer Materialien.**

(57) Der Patentanspruch bezieht sich auf chemische Stoffe und deren Mischungen, die in der Lage sind, organische Materialien im land- und forstwirtschaftlichen sowie gärtnerischen Bereich zu zermürben bzw. zu zersetzen.

Ein Hauptanwendungsfeld ist die Aufspritzung der Stoffe auf Stroh von Halmfrüchten aller Art unmittelbar nach der Ernte. Dadurch wird u. a. die mechanische Einbringung des Strohes in die Ackerkrume erleichtert, Arbeitszeit gespart, die Rotte gefördert, eine termingerechte Einsaat und Reduzierung des Saatgutes ermöglicht, ein N-, $PO_4$- und $SO_4$-Depot-(Vorrats-)Dünger geschaffen, der die Auswaschung der Nährstoffe und deren Festlegung vermindert. Zudem ist Zwischenfruchtanbau besser praktikabel. Sämtliche für die Anwendung vorgesehenen Mischungen (Dünger) sind so kombiniert, daß sie keine ökologischen Schäden hervorrufen.

_Beschreibung:_

Chemische Stoffe und Stoffmischungen zur Zermürbung (Zersetzung) organischer Materialien

Der Patentanspruch (die Erfindung) betrifft Stoffe zur Zermürbung bzw. Zersetzung organischer Materialien im land- und forstwirtschaftlichen sowie gärtnerischen Bereich.

Das Hauptanwendungsfeld wird das Stroh von Halmfrüchten aller Art im Acker- und Pflanzenbau sein. Hier bewirken die zu Stroh-Verwertungs-Düngern kombinierten Stoffe (Stoffgemische):

- eine Zermürbung (Zersetzung) des Strohes auf dem Felde , die nach 4-7 Tagen abgeschlossen ist und zu keinerlei Verzehr an Humus im Boden führt;
- durch ein komplettes Angebot aller Hauptnährstoffe (K aus dem Stroh) sowie einiger Spurenelemente, vor allem B und Cu, wird vielmehr die mikrobielle Rotte im Boden auf natürliche Weise gefördert.

- Die durch die aufgespritzten Dünger (Stoffmischungen) bewirkte Zermürbung (Zersetzung) läßt den Einsatz von Geräten zur Bestellung der nächsten Frucht reduzieren (s. Tab. 1) und

- Arbeitszeit sparen (s. Tab. 1).

- Da das Saatbett optimaler als bei sonst vergleichbarer Behandlung des Strohes ausfällt (Bodensackung, weniger Strohpolster und frei hängende Wurzeln, günstige Luft- und Wasserverhältnisse) kann die Aussaatmenge i.d.R. um 10-20% vermindert werden,

- zudem kann die Saat termingerecht eingebracht werden, was besonders für Raps und W-Gerste sowie Zwischenfrüchte relevant ist.

- Der Anbau von Zwischenfrüchten als Stoppelsaat wird durch die sogen. Stroh-Verwertungs-Dünger oft erst möglich.

Bisher sind noch keine chemischen Stoffe (Substanzen, Dünger) für eine gezielte Verwertung, vor allem Zermürbung (Zersetzung) von Stroh _auf dem Felde_ nach

- 2 -

0145790

der Ernte von Halmfrüchten in Anwendung bzw. speziell dafür im Handel. Gelegentlich wurde und wird zwar Kalkstickstoff ($CaCN_2$ + CaO + C) zur Zersetzung von Stroh verabreicht. Dies führt aber zu keinem zufriedenstellenden Effekt, sonst würde er auch mehr angewendet. Eine weitere Bemühung ist, das C:N-Verhältnis durch Düngung von Stickstoff im Boden zu verbessern. Aber diese Maßnahme wirkt sich erst mikrobiell aus, wenn das Stroh bereits mechanisch in die Ackerkrume eingearbeitet wurde. Oft fehlen für eine optimale Rotte dann aber noch andere Nährstoffe, vor allem Phosphor.

Ganz besondere Schwierigkeiten treten bezüglich der Einarbeitung von Stroh in die Ackerkrume immer dann auf, wenn viecharm oder gar viehlos gewirtschaftet wird, das Stroh also nicht auf einer Dungstätte zur Verrottung gelangt und zudem der Anteil an Halmfrüchten in der Fruchtfolge hoch ist.

Die Problematik der Strohverwertung im Acker- und Pflanzenbau geht u.a. aus folgenden Arbeiten hervor:

Vetter, H. (1959): Einfluß von Strohdüngung auf Boden und Pflanzen. Mitteilgn. Dtsch. Landw. Gesellschaft 74, 110

Köhnlein, J. und H. Vetter (1963): Ergebnisse zehnjähriger Feldversuche mit Stroh- und Stallmistdüngung auf Parabraunerde und Heidepodsol. Z. Acker- und Pflanzenbau 117, 379-394

Boguslawski, E.v. (1964): Die Verwertung der Strohernten als Strohdüngung. Arbeiten der DLG 96

Debruck, J. (1965): Untersuchungen über die Wirkung von Strohdüngung, Gründüngung und Stickstoffdüngung auf Fußkrankheiten und Ertragsbildung bei Getreide. Z. Acker- und Pflanzenbau, 123, 75-105

Range, W. (1966): Ertragsbildung, Fußkrankheitsbefall und C/N-Umsatz im Boden in Abhängigkeit von Strohdüngung und Gründüngung in getreidereichen Fruchtfolgen. Diss. Gießen, Landw. Fak.

0145790

Debruck, J. (1968): Fruchtfolgeprobleme im Rahmen der Vereinfachung des Pflanzenbaues. Ergebnisse landw. Forschung an der Justus Liebig Universität

Kemper, A. (1968): Über die Verbreitung von frei-lebenden Nematoden der Gattung Pratylenchus auf landwirtschftlich genutzte Flächen in Westfalen-Lippe. Gesunde Pflanze, 20, 127-130

Flaig, W. (1969): Einige Eigenschaften der organischen Substanz bei der Bodenbildung. Landbauforschung, Völkenrode, H. 1, 11-20

Kürten, P.W. und H. Trost (1973): Wirkung zwölfjäh-riger unterschiedlicher organischer Düngung in einer getreidereichen Fruchtfolge auf Sandböden. Z. Landw. Forschung 30, 11, 153-166

Weichelt, Th., W. Ziechmann und P. Azizi (1979): Aus-wirkungen organischer Dünger auf Lignin und Humin-säuren in einem Boden aus aufgespültem Lößmaterial. Mitteilgn. Dtsch. Bodenkundl. Gesellsch. 29, 277-290

Weichelt, Th. (1981): Isolierung und Kennzeichnung von Lignin aus einem Podsol-B-Horizont. Z. Pflanzen-ernaehr. Bodenkd. 144, H. 6, 565-579

Weichelt, Th. (1981): Gewinnung, Nachweis und che-misch physikalische Eigenschaften des Lignin-Humin-säure-Komplexes aus dem B-Horizont eines typischen Sandpodsols. Mitteilgn. Dtsch. Bodenkundl. Gesell-sch., 32, 551-566

Die neuen Stroh-Verwertungs-Dünger (Stroh-Veredlungs-Dünger) bestehen z.B. aus:

<u>Dünger I</u> (Feststoffmischung)

a) Eisensulfat ($FeSO_4$ x 7 $H_2O$, Eisenvitriol)
b) Harnstoff
c) Dicyandiamid (DCD = 1-Cyan-Guanidin)
d) evtl. Harnstoffnitrat

<u>Dünger II</u> (Flüssigmischung)
a) ortho-Phosphorsäure ($H_3PO_4$)
b) Schwefelsäure ($H_2SO_4$)
c) Wasserstoffsuperoxid ($H_2O_2$)

d) Harnstoff

e) Borax ($Na_2B_4O_7 \times 10 \, H_2O$)

Bis auf $H_2O_2$ kommen sämtliche Bestandteile der neuen Stroh-Verwertungs-Dünger in Handelsdüngern vor oder können aus diesen im Boden entstehen. Das $H_2O_2$ gelangt nach der Anwendung gar nicht erst in die Ackerkrume, denn wie aus Abb. 1 hervorgeht, werden die Dünger auf Stroh in einer Menge von 400 ℓ gespritzt, wodurch der atomare Sauerstoff des $H_2O_2$ schnell an die Komponenten des Strohes abgegeben wird.

Folgende Aufbringungsmengen sind in der praktischen Landwirtschaft z.B. pro ha vorgesehen

$$
\left.
\begin{array}{l}
100 \ kg \ \ FeSO_4 \times 7 \, H_2O \\
70 - 100 \ kg \ Harnstoff \\
\phantom{0}5 - 40 \ \ \ kg \ Dicyandiamid \\
10 - 50 \ \ \ kg \ Harnstoffnitrat
\end{array}
\right\} \ Dünger \ I
$$

$$
\left.
\begin{array}{l}
50 \ kg \ H_3PO_4 \ \ (71\%ig, \ D = 1,52) \ 32,9 \ ℓ \\
92 \ kg \ H_2SO_4 \ \ (96\%ig, \ D = 1,84) \ 50 \ \ \ \ ℓ \\
20 \ kg \ H_2O_2 \ \ \ (35\%ig, \ D = 1,13) \ 17,7 \ ℓ \\
25 \ kg \ Harnstoff \\
\phantom{0}3 \ kg \ Borax
\end{array}
\right\} \ Dünger \ II
$$

Die Eigenschaften und Wirkungsweisen der Dünger ergeben sich aus den Einzelstoffen sowie deren Wechselbeziehungen untereinander:

Dünger I : $FeSO_4 \times 7 \, H_2O$ bewirkt eine hydrolytische Spaltung von Kohlenhydratketten und gleichzeitig Oxidationsprozesse am Stroh. Harnstoff, Harnstoffnitrat und Dicyandiamid verstärken diese hydrolytische Wirkung noch, indem sie vom Eisensulfat protonisiert werden. Dicyandiamid ist als Nitrofikationshemmer bekannt. Als Nährstoffe sind N und $SO_4$ wichtig, im Eisenvitriol kommen zudem einige Spurenelemente vor, vor allem Cu.

Dünger II : $H_3PO_4$ wirkt wiederum hydrolytisch. Besonders bemerkenswert ist, daß die Phosphationen an die Komponenten des Strohes gebunden werden. Dies ist auch bezüglich der $SO_4$-Ionen der Schwefelsäure der Fall. Damit ist ein zweifacher organisch-mineralischer Depot -(Vorrats-) Dünger (sogen. "denkender Dünger") entstanden. Die Schwefelsäure zersetzt das Stroh auch aufgrund ihrer hygroskopischen Eigenschaft. $H_2O_2$ setzt, wie oben bereits erwähnt, atomaren Sauerstoff für oxidative Prozesse am Stroh frei. Harnstoff fördert die chemische Strohzermürbung (Zersetzung), weil er durch Phosphorsäure acid wird. Borax ist ein Oxidationsmittel, das aber in der Pflanzenernährung von jeher zur B-Verabreichung eingesetzt wird.

Die beschriebenen Stroh-Verwertungs-Dünger I und II reagieren sauer. Dennoch ist auch kurzfristig keine nennenswerte Absenkung des pH-Wertes im Boden zu befürchten, weil a) eine Reihe von funktionellen Gruppen im Stroh (Keto-, Aldehyd- und Aminogruppen) sowie Säureamide die Wasserstoffionen (Protonen) der Dünger abfangen (Protonisierung). b) Außerdem stellt der Boden ohnehin ein wirksames Puffersystem dar, das größere pH-Wertschwankungen vermeiden würde.- Bei kationenarmen, zur Versauerung neigenden Böden ist dennoch eine Ausgleichskalkung notwendig. Diese kann im üblichen 3-4-jährigen Turnus der Erhaltungskalkung vorgenommen werden. Alle kalkreichen Böden wie Rendzinen, Kalkschwarzerden, Kalkmoore und die meisten Parabraunerden bzw. Fahlerden benötigen diese Ausgleichskalkung gar nicht oder nur in geringem Ausmaße. Die Kosten für eine eventuelle Ausgleichskalkung ist den Leistungs-Kosten-Rechnungen entnehmbar. Die Höhe des Ca-Bedarfs ergibt sich aus den Neutralisationsgleichungen.

wichtig:

Für die Zermürbung bzw. Zersetzung von organischen Materialien, auch speziell des Strohes von Halmfrüchten, können desweiteren die zusätzlich im Patentanspruch aufgeführten Stoffe verwendet werden.

0145790

Die Produktion und den Vertrieb der Dünger sowie sämtliche Kosten für die laufenden Untersuchungen hat die Firma

KERTESS-Chemie
Theodor Kertess GmbH, CO KG
An der Weide 13
D-3000 Hannover 1
Tel.: (0511) 8509-0

übernommen.

Schließlich sind nach Testserien im Labor seit 1977 unter Anleitung des Anmelders (Erfinders)

Abt. Chemie und Biochemie im System Boden
-Lehrgebiet Chemie - Leiter: Prof. Dr. W.
Ziechmann
Institut für Bodenwissenschaften
der Georg-August-Universität
Von-Siebold-Str. 2 - 3400 Göttingen

laufend Feld- sowie umfangreiche Keimauflaufversuche durchgeführt worden.

Bei den Ertragsmessungen im Freiland ergaben die Stroh-Veredlungs-Dünger stets einen höheren Korn-zuwachs als die Summe der möglichen Einzelkomponenten sowie deren Kombinationen. Diese Erträge wurden mit Parazellenbehandlungen verglichen, wo das Stroh ungedüngt blieb oder (was noch aussagekräftiger war) mit solchen, die einen kompletten Nährstoff-Ausgleich mit anderen Düngern erhielten.

Zu den bisher <u>amtlich</u> getroffenen Maßnahmen gehören:

1. Dem Ministerium für Ernährung, Landwirtschaft und Forsten (BML) in Bonn liegen Anträge zur Zulassung der näher beschriebenen Stroh-Verwertungs-Dünger vor. Diese werden dort als "interessante Entwicklung" angesehen.

2. Untersuchungen
   2.1 Keimauflaufversuche in der Landwirtschaftlichen Untersuchungs- und Forschungsanstalt

0145790

(LUFA), Hameln, unter Anleitung von Herrn Dr. Merkel.

    2.2 Feld-Exakt-Versuche zur Überprüfung der Mehrerträge durch das Institut für Pflanzenernährung der Universität Bonn, Prof. Werner.

    2.3 Langzeit-Feld-Exakt-Versuche durch das
Institut für Bodenkunde der Universität
Oldenburg, Prof. Gebhardt.

    2.4 Groß-Feld-Versuche in der landwirtschaftlichen Praxis, die repräsentativ für den
Norddeutschen Raum sind. So bei den Landwirten:
KURRE, Angerstein bei Nörten-Hardenberg;
KLINGE, Ossenfeld bei Dransfeld;
WILLERDING, Ahrenfelde bei Giesen;
HERWIG, Göttingen-Nikolausberg;
OLMS, Bettrum bei Peine;
SAAGE, Depoltshausen bei Göttingen;
NOLTE, Göttingen-Nikolausberg.

3.   Analysen der relevanten Düngermischungen durch
die LUFA, Hameln, Dr. Severin.

Aus den folgenden Kalkulationen geht einwandfrei
die Wirtschaftlichkeit der Stroh-Veredlungs-Dünger
gegenüber jeder anderen gleichwertigen Nährstoffkombination hervor.

_Leistungs-Kosten-Vergleich für Dünger 1 in DM/ha_

_Aufwand:_    100 kg $FeSO_4 \times 7\ H_2O$ =   15,00 DM
(Kertess-
Preise)     80 kg Harnstoff    =   34,40 DM

          20 kg Dicyandiamid =   59,00 DM

    200 kg                108,40 DM

         Transport      16,00 DM
         Mischen       8,00 DM
         Allgem.
         Betriebskosten   13,48 DM
         (Strom etc.)
         Provision       7,59 DM

                   153,52 DM
         Raiffeisen      23,03 DM

                   176,57 DM

         Zinsen:
         25,56 $\times$ 0,08 =    2,04 DM

                   178,61 DM/ha   Gesamtaufwand

_Leistungen:_

$SO_4$          =    7,08 DM (Preis aus Diff. zw. $K_2SO_4$ +
                            KCl, Hellersche Preisliste
                            1983/84)

Harnstoff     =   35,20 DM
Dicyandiamid   =   59,00 DM
Maschinenersparnis        =   30,00 DM   (nach KTBL, 1982)
Mehrertrag    =   19,60 DM

             154,01 DM/ha Gesamtleistungen

_Differenz:_    176,57 - 154,01 =   24,60 DM/ha

aber u.a. nicht bewertet: - Arbeitszeitersparnis   ($\sim$ 20,00 DM/ha)
                        - Saatgutersparnis     ($\sim$ 20,00 DM/ha)
                        - termingerechte Einsaat
                        - Zwischenfruchtanbau

Aufwand für Ca-Zusatzkalkung = 2,00 DM/ha (falls überhaupt notwendig)

Leistungs-Kosten-Vergleich für Dünger II in DM/ha

**Aufwand:** 38 kg 71%ige $H_3PO_4$ (D = 1,52) = 25 ℓ = 28,50 DM
(Kertess    92 kg 96%ige $H_2SO_4$ (D = 1,84) = 50 ℓ = 13,80 DM
Preise)    10 kg 35%ige $H_2O_2$ (D = 1,13) = 8,85ℓ = 12,90 DM
     25 kg Harnstoff              = 10,75 DM
     1,5 kg Borax              = 1,95 DM
                            67,90 DM
           Transport    13,32 DM
                         81,22 DM

Pro 100 kg = 81,22 : 1,665 = 48,78 DM Selbstkosten
                        2,00 DM Mischen
                        6,74 DM Allgem. Betriebskosten
                        3,22 DM Provision
                      60,74 DM
Pro ha = 60,74 x 1,665 = 101,13 DM
                        15,17 DM Raiffeisen-Vertrieb
                    116,30 DM
Zinsen ( 5 x 0,08 ) = 0,40 DM
                    116,70 DM / ha Gesamtaufwand

**Leistungen:** 11,5 kg N; 39,1 kg $P_2O_5$ = 26,15 kg $PO_4$ = 8,53 kg P;
           86,6 kg $SO_4$ = 28,3 kg S

$PO_4$ = 38 x 0,71 x 0,316 x 1,683 =    14,35 DM
  (Menge  (% $H_3PO_4$) (% P-Gehalt) (P-Preis, Heller-
  $H_3PO_4$                    sche Preisliste
  kg)                     1983/84)

$SO_4$ = 92 x 0,96 x 0,98 x 0,205 =    17,74 DM
  (Menge  (% $H_2SO_4$) ($SO_4$-Gehalt) ($SO_4$-Preis, Diff. zw.
  $H_2SO_4$kg)                  $K_2SO_4$ u. KCl, Heller-
                          sche Preisliste
                          1983/84)

Harnstoff (25 x 0,44 ) (Preis n. Landhandel)    11,00 DM
Borax    (1,5 x 1,7 ) (Preis n. Hellersche Preisliste   2,55 DM
             1983/84)

Maschinenersparnis (nach KTBL, 1982)    30,13 DM

Mehrertrag                      31,00 DM
                          111,30 DM/ha
                          Leistung

0145790

_Differenz:_  116,70 - 111,30 = 8,42 DM/ha

aber  u.a. nicht bewertet: - Arbeitszeit $\quad\quad\quad$ (~20,00 DM/ha)

$\quad\quad\quad\quad\quad\quad\quad\quad\quad\quad$ - Saatgutersparnis $\quad\quad$ (~20,00 DM/ha)

$\quad\quad\quad\quad\quad\quad\quad\quad\quad\quad$ - termingerechte Einsaat

$\quad\quad\quad\quad\quad\quad\quad\quad\quad\quad$ - Zwischenfruchtanbau

Ca-Zusatzkalkung:  pH 7 = 52,5 kg Ca/ha  x  0,125 $\quad$ =  6,56 DM/ha

$\quad\quad\quad\quad\quad\quad\quad\quad\quad\quad\quad$ ($CaCO_3$, Hellersche Preisliste
1983/84)

$\quad\quad\quad\quad$ pH 6  = 5,91 DM/ha

_Differenz:_  116,70 - 111,30 = 8,42 DM/ha

aber  u.a. nicht bewertet: - Arbeitszeit $\quad\quad\quad$ (~20,00 DM/ha)

0145790

Tabelle 1  Alternativen zur Stroheinbringung und Saatbettzubereitung (berechnet nach KTBL-Taschenbuch, 1982) aufgrund von Feldversuchen

| konventionell | ohne Lohnkosten | |
|---|---|---|
| | mit Stroh-Zersetzungs-Dünger | Differenz DM/ha |
| -Pflügen 23,- bis 40,25 DM<br>-Kreiselegge 35,-<br>__58,- bis 75,25 DM__<br><br>- evtl. noch Kombination oder Saategge | - Pflügen, flach<br>- Schälen, tief 20,-<br>(17 cm)<br><br>- Rüttelegge 18,- bis 25,-<br><br>- evtl. noch Kombination<br><br>- oder Saategge | 3o,- bis 30,25<br><br>∅ = 30,13 |
| - Fräsen 40,-<br>-Kreisel- 35,-<br>egge<br>__75,-__<br><br>- evtl. noch Kombination<br>- oder Saategge | - Pflügen, flach<br>- Schälen, tief 20,-<br>(17 cm)<br><br>- Rüttelegge 18,- bis 25,-<br><br>- evtl. noch Kombination<br>- oder Saategge | 37,- bis 30,-<br>∅ = 33,50 |
| - Fräsen 40,-<br>-Rüttelegge 18,- bis 25,-<br>__58,- bis 65,-__<br><br>- evtl. noch Kombination<br>- oder Saategge | - Schälen 15,-<br>- Rüttelegge 18,- bis 25,-<br>__33,- bis 40,-__<br><br>- evtl. noch Kombination<br>- oder Saategge | ∅ = 25,- |

| | | | | | | |
|---|---|---|---|---|---|---|
| – Scheibenegge, längs | 15,– | | – Scheibenegge –Rüttelegge | 15,–<br>18,– bis 25,– | | 32,– bis 25,– |
| – Scheibenegge, quer | 15,– | | | 33,– bis 40,– | ∅ = | 28,– |
| – Kreiselegge | 35,–<br>―――<br>65,– | | – evtl. noch Kombination<br>– oder Saategge | | | |
| – evtl. noch Kombination<br>– oder Saategge | | | | | | |
| – Schälen | 15,– | | – Tiefgrubber | 20,– bis 25,– | | |
| – Kreiselegge | 35,–<br>―――<br>50,– | | – Rüttelegge | 18,– bis 25,–<br>38,– bis 50,– | | max. 12,– |
| – evtl. noch Kombination<br>– oder Saategge | | | – evtl. noch Kombination<br>– oder Saategge | | | |
| – Schälen | 15,– | | – Spatenrollegge | 11,– bis 17,– | | |
| – Kreiselegge | 35,–<br>―――<br>50,– | | – Rüttelegge | 18,– bis 25,–<br>29,– bis 42,– | | 21,– bis 8,– |
| – evtl. noch Kombination<br>– oder Saategge | | | – evtl. noch Kombination<br>– oder Saategge | | ∅ | = 9,50 |

*Abbildung 1*

( Einkauf des (der) Stroh- Verwertungs - Dünger )

| Stroh | a) ausbreiten |
|---|---|
| | b) häckseln (nicht unbedingt erforderlich) |
| | c) möglichst kurze Stoppeln mähen |

Spritzen des
(der) Stroh-Verwertungs-
Dünger auf das Stroh
Vol.-Menge: 400 ℓ/ha

Stroheinarbeitung in Verbindung mit der Bodenbearbeitung zur Bestellung der nächsten Frucht. Wahl der Geräte nach Strohmenge und Bodeneigenschaften

z. B.    Schälen        oder    Grubbern
         Rüttelegge              Egge
         Saategge

Einsaat der nächsten Frucht
( bereits 4 Tage nach der
Getreideernte praktikabel)

**Abb. 1** Generelle Übersicht über den Einsatz von strohzersetzenden Mitteln

0145790

Patentansprüche

Der Patentanspruch betrifft chemische Stoffe und Mischungen daraus, die dadurch gekennzeichnet sind, daß sie organische Materialien zermürben (zersetzen) können.

Der Patentanspruch soll sich im einzelnen beziehen auf die land- und forstwirtschaftliche sowie gärtnerische Anwendung und betrifft die Stoffe gelöst oder ungelöst, mit und ohne Kristallwasser, in allen Mengen und Konzentrationen:

1. Eisenverbindungen
2. Aluminiumverbindungen
3. Persulfate (Peroxidsulfate von Na, K, Mg, Ca, $NH_4^+$)
4. Borate und Perborate
5. Phosphorsäuren
6. Schwefelsäuren, schweflige Säuren
7. Wasserstoffsuperoxid ($H_2O_2$) und Peroxide aller Art
8. Ozon ($O_3$)
9. Hydrochinon (1,4-Hydroxybenzol)
10. Pyrogallol (1,2,3-Hydroxybenzol)
11. Permanganate (Na- und K-Permanganate)
12. Kaliumdichromat
13. N-haltige Verbindungen (Harnstoff, Harnstoffnitrat, Dicyandiamid) sowie Verbindungen mit Lithium (Li), Natrium (Na), Kalium (K), Magnesium (Mg), Calcium (Ca), Barium (Ba), Titan (Ti), Vanadium (V), Chrom (Cr), Mangan (Mn), Cobalt (Co), Nickel (Ni), Cupfer (Cu), Zink (Zn), Silizium (Si), Phosphor (P), Schwefel (S), und Molübdän (Mo).